# EUROPEAN PATENT APPLICATION

(11) **EP 1 176 042 A1**
(43) Date of publication of application: **30.01.2002**
(21) Application number: 01306408.4
(22) Date of filing: 26.07.2001
(51) Int. Cl.: B60J 7/14

(54) **Vehicle roof with movable panels**

(30) Priority: 26.07.2000 US 220712 P
(71) Applicant: Meritor Light Vehicle Systems, Inc., Troy, Michigan 48084 (US)
(72) Inventor: Sotiroff, John A., Beverly Hills, Michigan 48025 (US); Tolinski, Roch J., Howell, Michigan 48843 (US); Hopson, Charles B., Lebanon, Tennessee 37087 (US); Chene, George R., Sterling Heights, Michigan 48314 (US); Dobson, Simon R., Folkestone, Kent CT20 3TA (GB); Fin, Enrico, Lake Orion, Michigan 48359 (US)
(74) Representative: Jones, John Bryn

(57) **Abstract**

A vehicle roof assembly (22) includes a stationary panel (24) and at least one moveable panel (26,28). The stationary panel (24) includes at least one cut away recess (34,36) adjacent an access passage to a vehicle, such as above a moveable door (30,32). The moveable roof panel (26,28) preferably is normally received within the recess (34,36) to form a completed roof panel. The moveable panel (26,28) preferably is automatically retracted responsive to movement of the door handle to provide a larger access passage into the vehicle. Moveable panels (26,28) may be provided on the driver and passenger side of the vehicle, for example.

## Description

### BACKGROUND OF THE INVENTION

This invention generally relates to vehicle roofs. More particularly, this invention relates to a vehicle roof design having moveable panels to permit easier access to the vehicle.

Modern day vehicles come in a variety of forms, such as passenger sedans, pickup trucks and sport utility vehicles. Typical configurations include doors that open to the side of the vehicle and allow a passenger or driver to enter or exit the vehicle. Other than in scenarios where the vehicle has a convertible top, some passengers or drivers may have difficulty entering or exiting the vehicle because of the coordinated movements needed to maneuver through an opened door into or out of a seat. This is particularly true for physically challenged, elderly or tall individuals.

There is a need for an improved vehicle configuration that allows easier access for such individuals. This invention addresses that need by providing a unique roof arrangement that has automatically moveable panels to provide a more accessible vehicle entry opening.

### SUMMARY OF THE INVENTION

In general terms, this invention is a vehicle roof assembly having moveable panels positioned above the vehicle entry points that move to provide a larger opening for an individual to enter or exit the vehicle. In one example, there is a stationary roof panel that forms front and rear edges of the roof. At least one of the side edges of the roof is partially formed by a moveable panel that is supported for movement relative to the stationary panel. A moving mechanism preferably moves the moveable panel into a retracted position toward a centerline of the roof.

In one example, the moveable roof panel automatically moves to the retracted position whenever the door handle is actuated. One arrangement includes a controller that determines whether a user has turned off the automatic retracting function and otherwise automatically moves the roof panel. Additionally, a user control is provided for keeping the retracted panel in the retracted position during driving conditions to provide further ventilation to the vehicle.

The various features and advantages of this invention will become apparent to those skilled in the art from the following detailed description of the currently preferred embodiments. The drawings that accompany the detailed description can be briefly described as follows.

### BRIEF DESCRIPTION OF THE DRAWINGS

Figure 1 schematically illustrates a vehicle having a roof portion designed according to this invention.
Figure 2 schematically illustrates an example roof assembly designed according to this invention showing retractable panels in a retracted position.
Figures 3A and 3B are cross sectional illustrations taken along the line 3A-3A in Figure 2 showing the panel in extended and retracted positions respectively.

### DETAILED DESCRIPTION OF THE PREFERRED EMBODIMENT

A vehicle 20 includes a roof assembly or portion 22. A stationary roof panel 24 preferably is immovably secured to appropriate portions of the vehicle body. Moveable roof panels 26 and 28 are supported for selective movement relative to the stationary panel 24. The moveable panels 26 and 28 preferably are located adjacent door openings and above a seat such that when the panels 26 or 28 are retracted, a greater opening for access to the vehicle is provided. In the illustrated example, the panel 26 is centered above a side opening provided by a door 30 while the panel 28 is centered above a side opening provided by a door 32. The doors 30 and 32 operate in a conventional manner.

The stationary panel 24 preferably includes a three-sided cut away recess or section 34 within which the moveable panel 26 fits to complete the driver side of the roof panel. Similarly, a three-sided cut away recess or section 36 exists on the opposite side of the stationary panel 24, within which the moveable panel 28 fits when the panel is in an extended position. The moveable panel 26 preferably completes a side edge 38 of the roof assembly 22 when it is received in the recess 34. The panel 28 preferably completes a side edge 39 of the roof assembly 22 when extended into the corresponding recess.

Although two recesses and two moveable panels are illustrated, this invention is not limited to such arrangements. At least one moveable panel with a corresponding recess or opening is within the scope of this invention.

The extended position of the moveable panels provides a sealed, closed roof surface.

The dimensions of the recesses 34 and 36 preferably are chosen to provide enough clearance through the roof of the vehicle to enable an individual to enter or exit the vehicle interior. Given this description, those skilled in the art will be able to choose appropriate dimensions and orientations to suit the needs of a particular situation.

The illustrated example includes a controller 40 supported on the vehicle. The controller 40 preferably communicates with a motorized mechanism 42 that is responsible for moving the panels 26 and/or 28 into the retracted or closed positions. In one example, whenever an individual operates a door handle, the corresponding moveable roof panel is retracted by the motorized mechanism 42.

The controller 40 preferably is programmed to accommodate different situations where an individual may not want the roof panel to retract when opening the door. An example would be during rain or other inclement weather where the individual does not desire the roof panel to retract upon opening the door.

A user control 44 preferably is also provided within the interior of the vehicle to allow an individual to selectively move one or more of the panels into a retracted position to provide additional ventilation to the interior compartment of the vehicle. In one example, the manual control 44 communicates with the controller 40, which in turn operates the motorized mechanism 42 in response to a request to retract or close the roof panel. Each of the panels preferably is individually controlled.

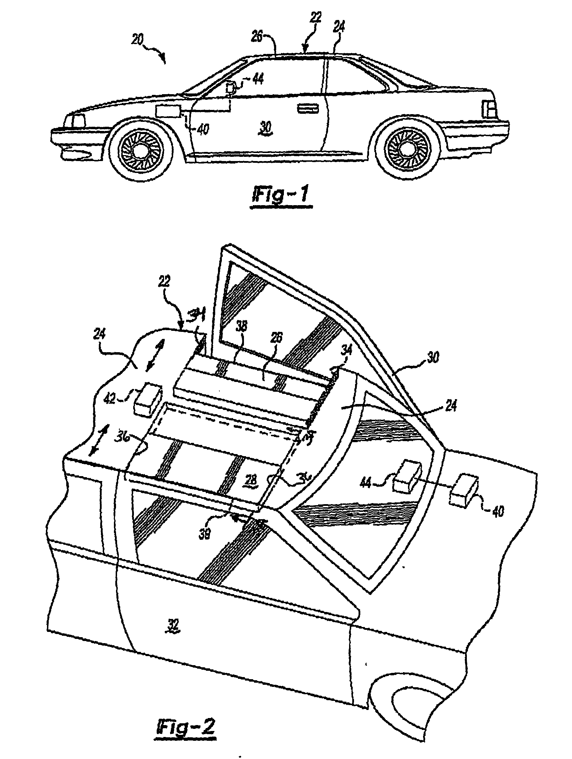

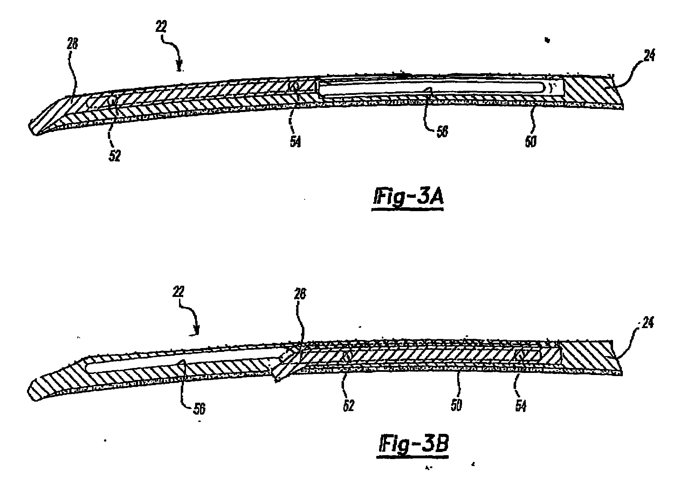

Given this description, those skilled in the art will realize a variety of ways to incorporate a stable retracted position for the moveable roof panel into a vehicle roof structure. The illustrations of Figures 3A and 3B schematically illustrate one arrangement. In Figure 3B of this example, the roof panel 28 is shown in a retracted position. The panel 28 is received between an exterior surface of the stationary panel 24 and a vehicle headliner 50 which provides an interior surface for the roof. The panel 28 is supported by two link members 52 and 54, which ride within a channel 56 supported as part of the roof assembly 22. The channel 56 preferably guides the panel 28 from an extended position (Figures 2 and 3A) where it closes off the recess 36 to provide a continuous roof surface, into a retracted position (as illustrated in Figure 3B) where the panel 28 is received within the roof assembly 22. Given this description, those skilled in the art will realize that known sunroof moving mechanisms can be used or modified to achieve the desired movement of the retractable roof panels.

In another example, which is not illustrated, the panel 28 moves into a retracted position where the panel 28 is positioned above the stationary panel 24. In another example, one of the moveable panels is retracted into a lowered position such as that shown in Figure 3B while the other panel is retracted into a position above the stationary roof panel to accommodate any overlap between the panels when they are both in a retracted position.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A vehicle (20) roof assembly (22) comprising a stationary panel (24) having first and second continuous edges with at least one side edge extending between the first and second edges, the side edge including at least one recess (34, 36); and
a moveable panel (26, 28) supported for movement relative to the stationary panel, the moveable panel being selectively received within the recess into a position to provide a completed roof surface, the moveable panel being selectively retracted from the recess to provide an access passage through the recess in the roof panel.

2. The assembly of claim 1, wherein the moveable roof panel includes a side edge (38, 39) that cooperates with the side edge of the stationary panel to provide a continuous side edge of the roof assembly when the moveable panel is received within the recess.

3. The assembly of claim 1 or claim 2, wherein the recess includes three sides and wherein the moveable panel is sealingly received against the three sides of the recess when the moveable panel is in an extended position.

4. The assembly of any preceding claim, including two moveable roof panels positioned on opposite sides of the roof assembly.

5. The assembly of any preceding claim, including a motorized mechanism (42) that causes movement of the moveable roof panel.

6. The assembly of claim 5, including a controller (40) that controls operation of the motorized mechanism to selectively move the moveable roof panel responsive to a command signal.

7. The assembly of claim 6, wherein movement of a door handle generates a command signal to the controller to move the moveable roof panel into a retracted position.

8. The assembly of any one of claims 5 to 7, including a manual control switch (44) that is selectively operable by an individual to generate a command signal to move the moveable roof panel.

9. A vehicle (20), comprising:
a roof portion (22) having a stationary roof panel (24) with at least one cut away section (34) that interrupts one side of the stationary roof panel;
a door (30) that is selectively moveable to gain access to an interior of the vehicle, the door being positioned adjacent the cut away section in the stationary panel when the door is in a closed position; and
a moveable roof panel (26) that is selectively received within the cut away section to close off the cut away section and provide a completed roof surface, one edge (38) of the moveable panel cooperating with a frame portion of the door to provide a closed interface between the moveable roof panel and the door when both are in a closed position.

10. The vehicle of claim 9, wherein the cut away section includes three sides and the moveable roof panel is sealingly received against the three sides when the panel is in a closed position.

11. The vehicle of claim 9 or claim 10, including a second door (32), a second cut away section (36) in the stationary roof panel and a second moveable roof panel (28) that is selectively received within the second cut away section.

12. The vehicle of any one of claims 9 to 11, including a motorized mechanism (42) that moves the moveable roof panel.

13. The vehicle of claim 12, including a controller (40) that controls the motorized mechanism responsive to a command signal indicating a desired movement of the moveable roof panel.

14. The vehicle of claim 13, including a manual control switch (44) that is operable by an individual to generate a command signal that is interpreted by the controller indicating a desired movement of the moveable panel.

15. A method of providing access to a vehicle (20) having a vehicle roof (22) that includes a stationary panel (24) and at least one moveable roof panel (26, 28) selectively positioned adjacent an access passage to the vehicle, comprising the steps of:
determine when an individual desires to enter or exit the vehicle; and
automatically moving the moveable roof panel into a retracted position to increase the size of the access passage.

16. The method of claim 15, including determining when an individual operates a door handle of the door automatically retracting the roof panel responsive to movement of the door handle.
